# EUROPEAN PATENT SPECIFICATION

(11) **EP 2 489 535 B1**
(45) Date of publication and mention of the grant of the patent: **11.09.2013**
(21) Application number: 12156311.8
(22) Date of filing: 21.02.2012
(51) Int. Cl.: B60H 1/32, B60H 1/00

(54) **Hvac unit arrangement avoiding condensate water leak through air intake**
Anordnung einer HVAC-Einheit zur Vermeidung des Leckens von Kondenswasser durch den Lufteinlass
Agencement d'unité HVAC empêchant la fuite d'eau condensée par le site d'admission d'air

(30) Priority: 21.02.2011 IT TO20110144
(43) Date of publication of application: 22.08.2012
(73) Proprietor: DENSO THERMAL SYSTEMS S.p.A., 10046 Poirino (Torino) (IT)
(72) Inventor: Davter, Massimo, I-10046 POIRINO (Torino) (IT)
(74) Representative: Vanzini, Christian

(56) References cited:
- EP-A2- 0 827 855
- JP-A- 10 129 246
- US-A- 3 918 271

## Description

The present invention relates to a HVAC unit for a vehicle, comprising
a housing comprising a plurality of side walls, inside which an air path is defined which in installed condition is arranged with a substantially vertical orientation, said air path comprising at least one air intake opening formed on at least one of said side walls of the housing and arranged close to the bottom of the housing, and at least one air outlet opening arranged at the top of the housing;
an evaporator arranged within the housing, at an upper level with respect to said at least one air intake opening; and
a blower arranged within the housing, and positioned at an upper level with respect to the evaporator or beside it.

Such HVAC units find use particularly in the field of earth-moving agricultural and special machines, and are typically installed within the vehicle cab.

In such HVAC units, it is desirable to avoid that the condensate water that is produced by the cooling action of the evaporator on the air can leak through the air intake openings, particularly when the unit is inclined, resulting in the risk of diffusing within the vehicle cab. Such a need is particularly felt in the earth-moving agricultural and special machines, which in certain conditions can be located in heavily bumpy soils and/or with high slopes.

Some applications are known, in which the evaporator is provided with a lower collection basket which is able to collect the condensate water, while avoiding water splashes upstream or downstream the evaporator.

The document US 3 918 271 discloses a HVAC unit of the type defined in the beginning. Such unit has an inclined structure, with a water draining wall, which is arranged inclined in front of an air intake opening.

Therefore, an object of the present invention is to provide a HVAC unit having a compact and simple architecture, in which the condensate water can be disposed of by following in the most linear way possible the force of gravity and the forces generated by the air flows.

Such an object is achieved according to the invention by a HVAC unit of the type defined in the beginning, further comprising condensate water deflecting means, which are interposed between said at least one air intake opening and the evaporator, and comprise at least one deflecting surface arranged at least on those of the side walls which have air intake openings formed thereon, each deflecting surface extending inwardly from a corresponding side wall of the housing and being in undercut relation with respect thereto.

According to such idea of solution, the deflecting surface allows conveying the condensate water towards the bottom of the housing, thus moving it away from the air intake openings, and further preventing such water from building up undesirably in some intermediate site. Also in the case of a relevant inclination of the unit, the deflecting surface prevents the water from coming to the underlying air intake opening.

Preferred embodiments of the invention are defined in the dependent claims, which are to be meant as an integral part of the present description.

Further characteristics and advantages of the HVAC unit according to the invention will be more clearly understood by the following detailed description of an embodiment of the finding, given with reference to the annexed drawings, given by way of non-limiting example only, in which:
- Figs. 1 to 4 are schematic sectional views of corresponding HVAC units according to the invention, having different arrangements of the components; and
- Fig. 5 shows the HVAC unit of Fig. 1 during operation, in which the unit is subjected to an inclination of a determinate angle with respect to its standard attitude.

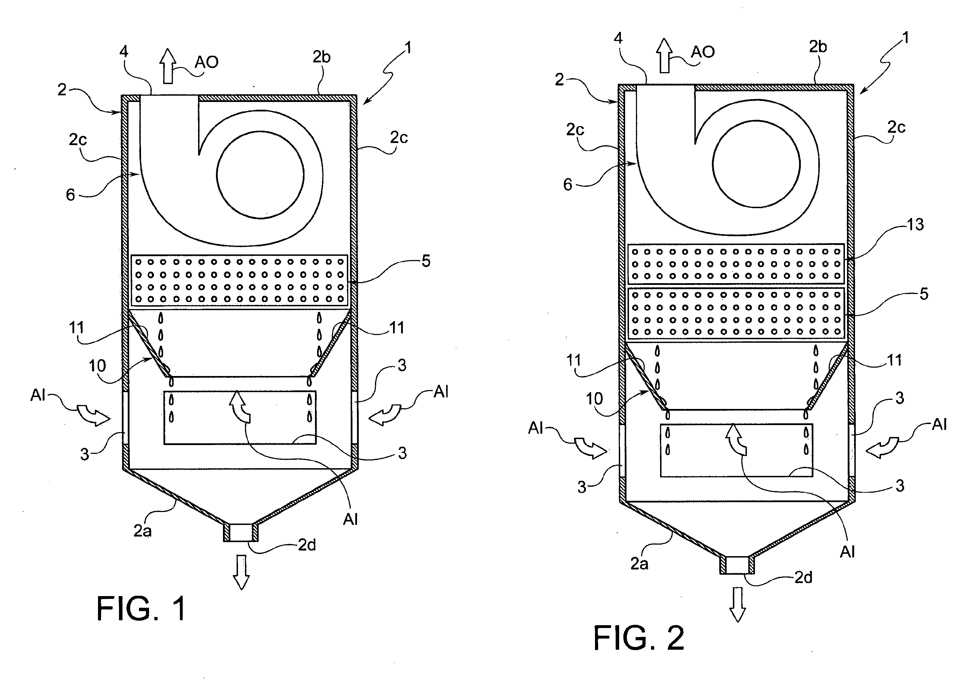

With reference to Fig. 1, a HVAC unit for a vehicle, generally indicated with 1, is represented partially in section in order to schematically illustrate the arrangement of the components therein.

The above-mentioned unit is of the type which is adapted to be installed with a substantially vertical orientation, corresponding to the one represented in the Figure, particularly, but not exclusively, in the cab of an earth-moving machine, an agricultural machine, or a special vehicle.

The HVAC unit 1 comprises a housing 2 having a polygonal, particularly rectangular, cross-section.

An air path is defined within the housing 2 (represented by the arrows AI and AO) which, in the installed condition of the unit, is arranged with a substantially vertical orientation. Particularly, the intake of air into the unit takes place close to the bottom 2a of the housing, and the outlet of air from the unit takes place from the top 2b of the housing, which is arranged vertically above the bottom of the housing.

The above-mentioned air path comprises at least one air intake opening 3 (in the Figure, a plurality of openings), formed on a corresponding side wall 2c of the housing 2 and arranged close to the bottom 2a of the housing, and at least one air outlet opening 4 arranged at the top 2b of the housing 2.

The unit 1 further comprises an evaporator 5 arranged within the housing 2 at an upper level with respect to the air intake openings 3, and a blower 6 also arranged within the housing 2 (downstream the evaporator), and positioned at an upper level with respect to the evaporator 5, that is above it.

The condensate water optionally produced by the cooling action of the evaporator 5 on the air passing through the HVAC unit 1 falls by gravity towards the bottom 2a of the housing 2, which is provided with at least a discharge opening 2d to discharge such water outside the housing 2.

The HVAC unit 1 also comprises condensate water deflecting means 10, which are interposed between the air intake openings 3 and the evaporator 5. Such deflecting means 10 are arranged to deflect any condensate water that may drop from the peripheral portions of the evaporator 5, or from the side walls 2c of the housing 2, so that such water continues its fall towards the bottom 2a of the housing 2, within an area having a reduced section with respect to the standard section of the housing 2. In other words, the area of the fall section of the water downstream the deflecting means 10 is lower than the area of the fall section of the water upstream the deflecting means 10. In this manner, the peripheral water fall trajectories are moved away from the air intake openings 3.

Particularly, the above-mentioned deflecting means 10 comprise at least one deflecting surface 11 extending from a corresponding side wall 2c inwardly of the housing 2, and arranged in an oblique or undercut relation with respect to the above-mentioned side wall 2c, when considered in the vertical direction. Particularly, such deflecting surface 11 is of such an extent that the condensate water deflecting means 10 are adapted to deflect exclusively a peripheral fraction (that is, closer to the walls of the housing) of the condensate water coming from the evaporator.

In the example illustrated, there is a plurality of such deflecting surfaces 11, each being associated to one of the air intake openings 3, and arranged above it. Particularly, such deflecting surfaces together form a truncated pyramid.

Furthermore, in the example illustrated, the deflecting means 10 are constituted by projections formed at least partially integrally with the side walls 2c of the housing 2. According to non-illustrated implementation modes, the deflecting means 10 could be constituted by a separate member mounted within the housing 2.

In Fig. 2, another HVAC unit according to the invention is illustrated, in which members corresponding to that of Fig. 1 have been assigned the same reference numerals.

The unit of Fig. 2 differs from the previous one in that it further comprises a heater 13 in order to optionally heat the air passing through the unit, which is arranged on top of evaporator, between the latter and the blower. As regards the rest of the construction of the unit, to the aims of the invention, the unit of Fig. 2 is the same as that of Fig. 1, therefore it will not be further described.

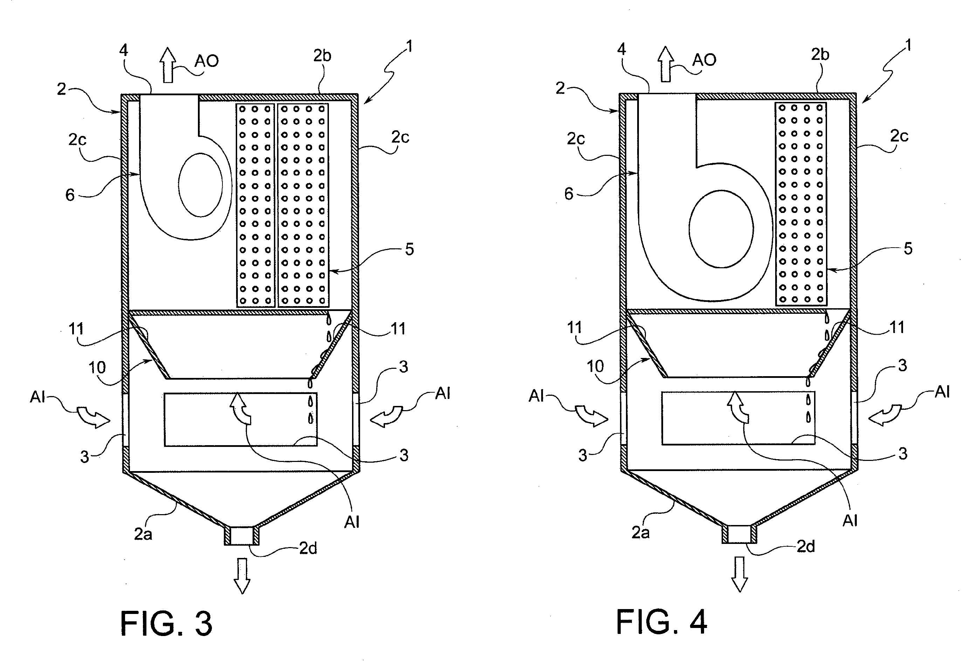

In Fig. 3, another HVAC unit according to the invention is represented, in which members corresponding to that of Fig. 1 have been assigned the same reference numerals.

The unit of Fig. 3 differs from the previous ones in that the blower is arranged beside the heater and the evaporator, and that these are arranged according to a vertical orientation. As regards the rest of the construction of the unit, to the aims of the invention, the unit of Fig. 3 is the same as that of Fig. 1, therefore it will not be further described.

In Fig. 4 another HVAC unit according to the invention is represented, in which members corresponding to that of Fig. 1 have been assigned the same reference numerals.
The unit of Fig. 4, similarly to the one of Fig. 3, has the blower arranged beside the vertically oriented evaporator, but it is without a heater. As regards the rest of the construction of the unit, to the aims of the invention, the unit of Fig. 3 is the same as that of Fig. 1, therefore it will not be further described.

According to further non-illustrated embodiments, the evaporator could be arranged according to an inclined orientation. According to further non-illustrated embodiments, the relative arrangement of the evaporator and the blower could be also different from those that are represented, according to several combinations that are known to those of ordinary skill in the art. Therefore, it is meant that the architectures considered above have been illustrated by way of non-limiting examples only, since the relative arrangement of blower/evaporator and the presence of optional further components in the unit are not relevant to the aims of the invention.

As it will be appreciated, the deflecting surface(s) allow conveying the condensate water towards the bottom of the housing optionally moving it away from the air intake openings, and further preventing it from building up undesirably in some intermediate site between the evaporator and the bottom of the housing.

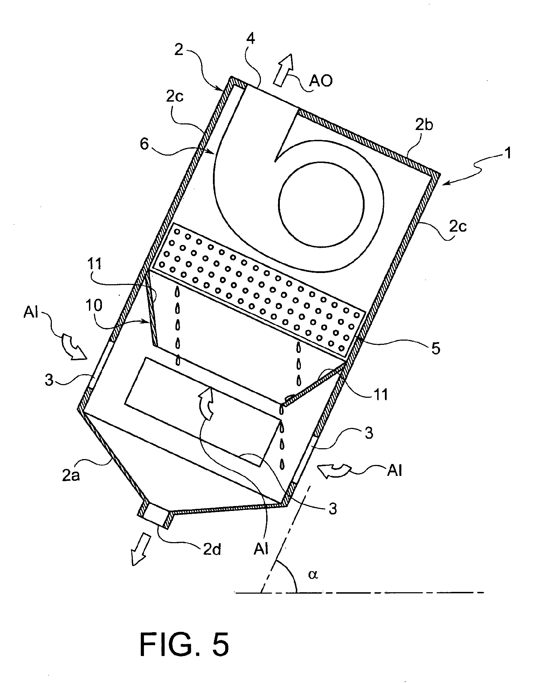

Also in the case of a considerable inclination of the HVAC unit with respect to its standard attitude, for example by an angle α as shown in Fig. 5, the deflecting surface acts so as to prevent the water from coming to the underlying air intake opening. According to the dimensions and shape of the deflecting surfaces, units that are free from abnormal water leakages also with inclinations of the unit above 30° can be obtained.

By suitably designing the deflecting surfaces, it is possible to achieve the above-mentioned effects without introducing an excessive pressure drop at the ends of the deflecting means.

## Claims

1. A HVAC unit (1) for a vehicle, comprising
a housing (2) comprising a plurality of side walls (2c), inside which an air path is defined which in installed condition is arranged with a substantially vertical orientation, said air path comprising at least one air intake opening (3) formed on at least one of said side walls (2c) of the housing (2) and arranged close to the bottom (2a) of the housing (2), and at least one air outlet opening (4) arranged at the top (2b) of the housing (2);
an evaporator (5) arranged within the housing (2) at an upper level with respect to said at least one air intake opening (3); and
a blower (6) arranged within the housing (2) and positioned at an upper level with respect to the evaporator (5) or beside it;
**characterized in that** it further comprises condensate water deflecting means (10) which are interposed between said at least one air intake opening (3) and the evaporator (5), and comprise at least one deflecting surface (11) arranged at least on those of the side walls (2c) which have air intake openings (3) formed thereon, each deflecting surface extending inwardly of the housing (2) from a corresponding side wall (2c) of the housing (2) and being in undercut relation with respect thereto.

2. A unit according to claim 2, wherein the extension of said at least one deflecting surface (11) is of such an extent that said condensate water deflecting means (10) are adapted to deflect a peripheral fraction of the condensate water coming from said evaporator.

3. A unit according to claim 1 or 2, wherein a plurality of said deflecting surfaces (11) are provided, said deflecting surfaces together forming a truncated pyramid.

4. A unit according to any of claims 1 to 3, wherein said condensate water deflecting means (10) are constituted by projections formed at least partially integrally with said side walls (2c) of the housing (2).

5. A unit according to any of claims 1 to 3, wherein said condensate water deflecting means (10) are constituted by a separate member mounted within the housing (2), on which said at least one deflecting surface (11) is formed.

## Patentansprüche

1. HVAC-Einheit (1) für ein Fahrzeug, umfassend
ein Gehäuse (2), umfassend eine Mehrzahl von Seitenwänden (2c), innerhalb welcher ein Luftpfad definiert ist, der im installierten Zustand mit einer im Wesentlichen vertikalen Ausrichtung angeordnet ist, wobei der Luftpfad mindestens eine Lufteinlassöffnung (3) umfasst, die an mindestens einer der Seitenwände (2c) des Gehäuses (2) gebildet und nahe dem Boden (2a) des Gehäuses (2) angeordnet ist, sowie mindestens eine Luftauslassöffnung (4), die am oberen Ende (2b) des Gehäuses (2) angeordnet ist;
einen Verdampfer (5), der innerhalb des Gehäuses (2) auf einer oberen Ebene in Bezug auf die mindestens eine Lufteinlassöffnung (3) angeordnet ist; und
ein Gebläse (6), das innerhalb des Gehäuses (2) angeordnet und auf einer oberen Ebene in Bezug auf den Verdampfer (5) oder neben diesem positioniert ist;
**dadurch gekennzeichnet, dass** sie weiters Kondenswasser-Ablenkmittel (10) umfasst, die zwischen der mindestens einen Lufteinlassöffnung (3) und dem Verdampfer (5) eingeschoben sind und mindestens eine Ablenkfläche (11) umfassen, die zumindest an jenen der Seitenwände (2c) angeordnet ist, an denen Lufteinlassöffnungen (3) gebildet sind, wobei sich jede Ablenkfläche von einer entsprechenden Seitenwand (2c) des Gehäuses (2) vom Gehäuse (2) nach innen erstreckt und sich diesbezüglich in einem Hinterschnittverhältnis befindet.

2. Einheit gemäß Anspruch 2, wobei die Verlängerung der mindestens einen Ablenkfläche (11) eine solche Ausdehnung hat, dass die Kondenswasser-Ablenkmittel (10) dazu angepasst sind, einen peripheren Bruchteil des vom Verdampfer kommenden Kondenswassers abzulenken.

3. Einheit gemäß Anspruch 1 oder 2, wobei mehrere dieser Ablenkflächen (11) vorgesehen sind, wobei die Ablenkflächen zusammen einen Pyramidenstumpf bilden.

4. Einheit gemäß einem der Ansprüche 1 bis 3, wobei die Kondenswasser-Ablenkmittel (10) durch Vorsprünge gebildet sind, die zumindest teilweise in den Seitenwänden (2c) des Gehäuses (2) integriert sind.

5. Einheit gemäß einem der Ansprüche 1 bis 3, wobei die Kondenswasser-Ablenkmittel (10) durch ein separates, innerhalb des Gehäuses (2) montiertes Element gebildet sind, auf welchem die mindestens eine Ablenkfläche (11) gebildet ist.

## Revendications

1. Unité de CVC (1) pour véhicule comprenant :
un boîtier (2) comprenant une pluralité de parois latérales (2c), à l'intérieur duquel est défini un chemin d'air qui, dans un état installé, est agencé avec une orientation substantiellement verticale, ledit chemin d'air comprenant au moins une ouverture d'admission d'air (3) formée sur au moins l'une des parois latérales (2c) du boîtier (2) et placée près de la partie inférieure (2a) du boîtier (2), et au moins une ouverture de sortie d'air (4) placée au sommet (2b) du boîtier (2) ;
un évaporateur (5) placé à l'intérieur du boîtier (2) à un niveau supérieur par rapport à ladite au moins une ouverture d'admission d'air (3) ; et
une soufflante (6) placée à l'intérieur du boîtier (2) et positionnée à un niveau supérieur par rapport à l'évaporateur (5) ou à côté de celui-ci ;
**caractérisée en ce qu'**elle comprend en outre un moyen de déviation d'eau de condensat (10) qui est intercalé entre ladite au moins une ouverture d'admission d'air (3) et l'évaporateur (5), et qui comprend au moins une surface de déviation (11) placée au moins sur les parois latérales (2c) qui comportent des ouvertures d'admission d'air (3), chaque surface de déviation s'étendant vers l'intérieur du boîtier (2) depuis une paroi latérale correspondante (2c) du boîtier (2) et étant sous-jacente par rapport à celle-ci.

2. Unité selon la revendication 1, dans laquelle l'étendue de ladite au moins une surface de déviation (11) est telle que ledit moyen de déviation d'eau de condensat (10) est adapté pour dévier une fraction périphérique de l'eau de condensat provenant dudit évaporateur.

3. Unité selon la revendication 1 ou 2, dans laquelle il est prévu une pluralité desdites surfaces de déviation (11), lesdites surfaces de déviation formant ensemble une pyramide tronquée.

4. Unité selon l'une quelconque des revendications 1 à 3, dans laquelle ledit moyen de déviation d'eau de condensat (10) est constitué par des saillies formées au moins partiellement d'un seul tenant avec lesdites parois latérales (2c) du boîtier (2).

5. Unité selon l'une quelconque des revendications 1 à 3, dans laquelle ledit moyen de déviation d'eau de condensat (10) est constitué par un élément distinct monté à l'intérieur du boîtier (2), sur lequel est formée ladite au moins une surface de déviation (11).
